# EUROPÄISCHE PATENTSCHRIFT

(11) **EP 2 618 955 B1**
(45) Veröffentlichungstag und Bekanntmachung des Hinweises auf die Patenterteilung: **06.07.2016**
(21) Anmeldenummer: 11746527.8
(22) Anmeldetag: 17.08.2011
(51) Int. Cl.: B23B 29/034

(54) **WERKZEUGKOPF FÜR DEN EINSATZ IN WERKZEUGMASCHINEN**
TOOL HEAD FOR USE IN MACHINE TOOLS
TÊTE D'OUTIL POUR UNE UTILISATION DANS DES MACHINES-OUTILS

(30) Priorität: 24.09.2010 DE 102010041336
(43) Veröffentlichungstag der Anmeldung: 31.07.2013
(73) Patentinhaber: Komet Group GmbH, 74354 Besigheim (DE)
(72) Erfinder: WIEST, Rudolf, 74354 Besigheim (DE); ANTONI, Arthur, 74369 Löchgau (DE); STADLER, Frank, 71729 Erdmannhaussen (DE)
(74) Vertreter: Gauss, Nikolai
(86) Internationale Anmeldenummer: PCT/EP2011/064144
(87) Internationale Veröffentlichungsnummer: WO 2012/038158

(56) Entgegenhaltungen:
- EP-A2- 0 382 474
- EP-A2- 0 640 421
- DE-A1- 2 434 041
- DE-A1- 4 139 650
- DE-B3-102007 041 447
- DE-U1- 8 403 099
- DE-U1-202004 001 293
- US-A- 4 847 975

## Beschreibung

Die Erfindung betrifft einen Werkzeugkopf für den Einsatz in Werkzeugmaschinen mit einem um eine Drehachse rotierbaren Grundkörper, mit einem über eine axial im Grundkörper ausgerichtete Zugstange verschiebbaren Schieber, der mit mindestens einem Werkzeug oder einem Werkzeugträger bestückbar ist, und mit wenigstens einer an dem Schieber festlegbaren verstellbaren Zahnplatte, die eine als Getriebemittel wirkende Schrägverzahnung für den Eingriff einer hierzu komplementären Schrägverzahnung der Zugstange aufweist, wobei der Schieber eine Verstelleinrichtung für das Bewegen der wenigstens einen Zahnplatte mit ihrer Schrägverzahnung in die hierzu komplementäre Schrägverzahnung der Zugstänge enthält.

Werkzeugköpfe dieser Art sind bekannt und werden in Werkzeugmaschinen für die Bearbeitung von Formelementen wie z. B. Einstichen, Hinterdrehungen, Zapfen und Bohrungen eingesetzt. Die DE 84 03 099 U1 offenbart ein Beispiel eines solchen Werkzeugkopfs. Die DE 84 03 099 U1 offenbart ebenfalls ein Verfahren zum Ausgleichen eines unerwünschten Spiels von Verzahnung und Zugstange in einem solchen Werkzeugkopf. Grundsätzlich können am Werkzeugkopf auch zwei oder mehr Schieber vorhanden sein.

In der DE 43 14 295 A1 ist ein Werkzeugkopf beschrieben, der einen Grundkörper hat, der um eine Drehachse rotiert. Der Werkzeugkopf enthält einen Schieber. Der Schieber dient als Aufnahme für ein Schneidwerkzeug. Der Schieber ist in einer Linearführung aufgenommen. In der Linearführung kann der Schieber mit einem Schneidwerkzeug entlang einer zu der Drehachse radialen Verstellachse bewegt werden. Für das Verstellen des Schiebers hat der Werkzeugkopf eine Zugstange. Diese Zugstange kann in Richtung der Drehachse axial bewegt werden. Die Zugstange weist eine Schrägverzahnung auf, die in eine am Schieber ausgebildete hierzu komplementäre Schrägverzahnung eingreift. Mittels dieser Verzahnung wird eine Axialbewegung der Zugstange in eine Radialbewegung des Schiebers umgelenkt.

Für das präzise Bearbeiten von Werkstücken mit einem an einem Werkzeugskopf der eingangs genannten Art aufgenommenen Schneidwerkzeug ist es erforderlich, dass sich der Schieber mit der Zugstange spielfrei verstellen lässt.

An der rotierenden Maschinenspindel in einer Werkzeugmaschine ist der Schieber sehr großen Kräften ausgesetzt. Diese Kräfte sind insbesondere durch Fliehkräfte und Zerspankräfte bedingt, die an einem Werkzeug, z.B. einem Schneidwerkzeug angreifen. Die Verzahnung von Zugstange und Schieber wird durch diese Kräfte belastet. Dies verursacht Verschleiß und führt zu einem unerwünschten Verstellspiel, wenn der Werkzeugkopf beim Bearbeiten von Werkstücken mit Werkzeugen über längere Zeiträume stark beansprucht wird.

Ausgehend hiervon liegt der Erfindung die Aufgabe zugrunde, einen Werkzeugkopf mit einem Schieber bereitzustellen, in dem ein unerwünschtes Spiel der Verzahnung von Schieber und Zugstange ausgeglichen werden kann.

Diese Aufgabe wird durch einen Werkzeugkopf mit den Merkmalen der unabhängigen Ansprüche 1 und 4 gelöst. Vorteilhafte Ausführungsformen der Erfindung sind in den von den Ansprüchen 1 und 4 abhängigen Ansprüchen angegeben. Diese Aufgabe wird ebenfalls durch ein Verfahren gemäß dem Anspruch 15 gelöst.

Ein erfindungsgemäßer Werkzeugkopf kann nicht nur einen" sondern auch zwei oder mehr Schieber enthalten. Die Reibungskräfte, die bei dem Eingriff einer Zugstangen-Schrägverzahnung in die Schrägverzahnung der Zahnplatte eines Werkzeugkopf-Schiebers auftreten, verursachen bei Verstellen des Schiebers Materialabtrag an den Schrägverzahnungen von Schieber und Zugstange. Ein Gedanke der Erfindung besteht darin, dass der Materialabtrag nur dort entsteht, wo sich Flächen der Schräganordnungen von Schieber und Zugstange gegenseitig berühren. Es ist eine Idee der Erfindung, dass das durch diesen Materialabtrag hervorgerufene Getriebespiel ausgeglichen werden kann, indem an dem Schieber eine Zahnplatte, die eine Schrägverzahnung aufweist, mit nur einem Bewegungsfreiheitsgrad linear verstellt wird.

Um dies zu erreichen, ist die wenigstens eine Zahnplatte in einer an dem Schieber ausgebildeten Linearführung geführt. Diese Linearführung ist senkrecht zu der Verstellrichtung des Schiebers ausgerichtet. Von Vorteil ist es, wenn die Linearführung als Parallelverzahnung ausgebildet ist. Mit einer solchen Parallelverzahnung können sehr große Kräfte von der wenigstens einen Zahnplatte in den Schieber und umgekehrt übertragen werden.

Für das Bewegen der wenigstens einen Zahnplatte an dem Schieber ist die Verstelleinrichtung in dem Schieber mit einem Keilgetriebe, einem Exzentergetriebe oder einem Schraubengetriebe gekoppelt. Eine bevorzugte Ausgestaltung der Erfindung sieht vor, dass die Verstelleinrichtung eine in dem Schieber aufgenommene Verstellschraube aufweist, mittels der ein bewegbar angeordneter Verstellkeil verlagert werden kann, der auf eine an der wenigstens einen Zahnplatte ausgebildete Keilfläche wirkt. Die wenigstens eine Zahnplatte kann dann mit wenigstens einem vorzugsweise als Befestigungsschraube ausgebildeten Befestigungsmittel lösbar an dem Schieber festgelegt werden.

Von Vorteil ist es, wenn ein die wenigstens eine Zahnplatte mit Kraft beaufschlagendes Federmittel vorgesehen ist, um die Schrägverzahnung der wenigstens einen Zahnplatte in die hierzu komplementäre Schrägverzahnung der Zugstange zu drücken. Bevorzugt ist die wenigstens eine Zahnplatte in einer an dem Grundkörper ausgebildeten Ausnehmung angeordnet, die einen das Federmittel abstützenden Wandabschnitt hat.

Eine Verbesserung der Erfindung sieht vor, dass die wenigstens eine Zahnplatte von einem Federmittel mit Kraft beaufschlagt ist, der die Zahnplatte gegen den Schieber drückt. Es ist in diesem Fall von Vorteil, wenn die Zahnplatten in einer an dem Grundkörper ausgebildeten Ausnehmung angeordnet werden, die einen das Federmittel abstützenden Wandabschnitt hat. Bevorzugt ist dieses Federmittel ein an dem Grundkörper oder der Zahnplatte aufgenommenes federndes Druckstück mit einer sich an dem Grundkörper oder der Zahnplatte abstützenden Wirkfläche und/oder eine an dem Grundkörper oder der Zahnplatte befestigte Kugeldruckschraube, die einen sich an dem Grundkörper oder der Zahnplatte abstützenden, bewegbaren Kugelkörper hat. Dies ermöglicht insbesondere den Ausgleich eines Spiels der Verzahnung von Schieber und Zugstange ohne aufwändiges Vermessen und Justage, wenn der Werkzeugkopf an die Maschinenspindel einer Werkzeugmaschine angeschlossen ist.

Für das Bewegen des Schiebers mit sehr hohen Verstellkräften ist es von Vorteil, wenn an dem Schieber wenigstens eine erste verstellbare Zahnplatte befestigt ist, die eine als Getriebemittel wirkende Schrägverzahnung für den Eingriff einer hierzu komplementären Schrägverzahnung der Zugstange aufweist, und an dem Schieber eine zweite verstellbare Zahnplatte festgelegt ist, die eine als Getriebemittel wirkende Schrägverzahnung für den Eingriff einer hierzu komplementären Schrägverzahnung der Zugstange hat. Für den Ausgleich von Verzahnungsspiel ist es dabei günstig, wenn die erste Zahnplatte und die zweite Zahnplatte voneinander unabhängig verstellbar sind.

Nach der Erfindung kann ein unerwünschtes Spiel von Verzahnung und Zugstange in dem Werkzeugkopf insbesondere wie folgt ausgeglichen werden: In einem ersten Schritt wird die wenigstens eine Zahnplatte von dem Schieberkörper zunächst gelöst. In einem darauf folgenden zweiten Schritt wird die entsprechende Zahnplatte an den Schieber formschlüssig angelegt.

In einem dritten Schritt wird die Zahnplatte an dem Schieber über eine Verstelleinrichtung mit Verstellkraft beaufschlagt, um die Schrägverzahnung der Zahnplatte in die hierzu komplementäre Schrägverzahnung der Zugstange zu drücken. In einem an den dritten Schritt anschließenden vierten Schritt wird die Zahnplatte an dem Schieber so festgelegt, dass die Zahnplatte an dem Schieberkörper kraftschlüssig fixiert ist. In einem auf den vierten Schritt folgenden fünften Schritt wird die Zahnplatte dann an dem Schieber über die Verstelleinrichtung mit Verstellkraft beaufschlagt, um die Zahnplatte an dem. Schieber formschlüssig festzulegen.

Im Folgenden wird die Erfindung anhand eines in der Zeichnung in schematischer Weise dargestellten Ausführungsbeispiels näher erläutert.

Es zeigen:
- Fig. 1: die Stirnseite eines Werkzeugkopfs in einer Draufsicht;
- Fig. 2: die Rückseite eines Werkzeugkopfs in einer Draufsicht;
- Fig. 3: eine Seitenansicht des Werkzeugkopfs mit mehreren Teilschnitten entlang den Linien I-I, II-II und III-III aus Fig. 1;
- Fig. 4: einen Schnitt des Werkzeugskopfs entlang der Linie IV-IV mit einem Teilschnitt entlang der Linie V - V aus Fig. 1;
- Fig. 5a: sowie Fig. 5b eine Explosionsdarstellung des Werkzeugskopfs mit unterschiedlichen Blickrichtungen;
- Fig. 6: eine Kugeldruckschraube in dem Werkzeugkopf; und
- Fig. 7: ein federndes Druckstück für den Einsatz in einem Werkzeugkopf.

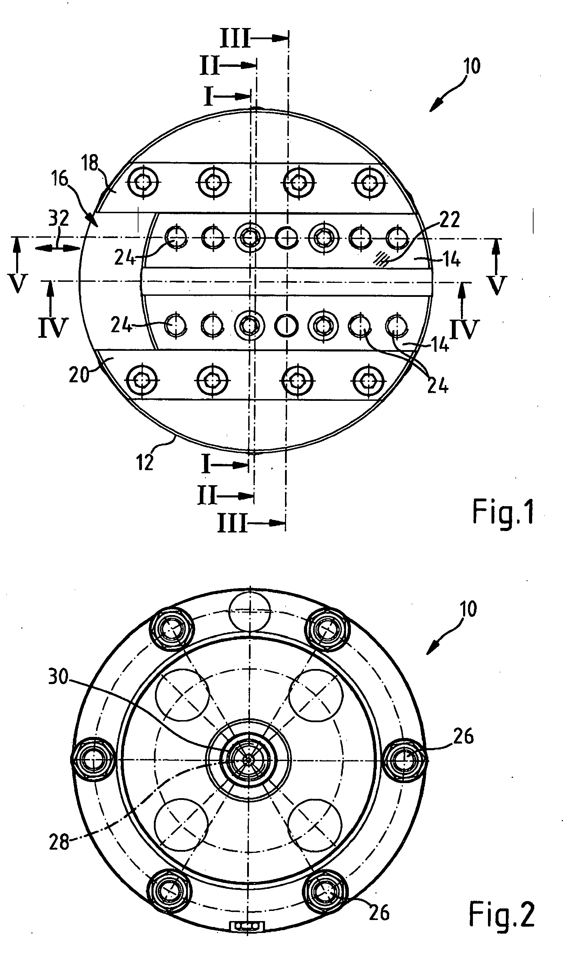

Der in der Fig. 1 gezeigte Werkzeugkopf 10 hat einen Grundkörper 12. An dem Grundkörper 12 ist ein beweglicher Schieber 14 aufgenommen. Der Schieber 14 ist in einem am Grundkörper 12 ausgebildeten Gleitlager 16 linearbeweglich geführt. In dem Gleitlager 16 ist der Schieber 14 mit einer ersten Leiste 18 und mit einer zweiten Leiste 20 gehalten.

Der Schieber 14 hat eine Schieberfläche 22, die mit einem Werkzeugträger für ein Schneidwerkzeug bestückbar ist. Für den Anschluss eines Werkzeugträgers gibt es an dem Schieber 14 mehrere Gewindebohrungen 24 zur Aufnahme von Befestigungsschrauben.

Die Fig. 2 zeigt die Rückseite des Werkzeugskopfs 10. An der Rückseite des Werkzeugskopfs 10 gibt es Anschlusselemente 26. Mittels der Anschlusselemente 26 kann der Werkzeugkopf 10 an die rotierende Maschinenspindel einer nicht weiter dargestellten Werkzeugmaschine angeschlossen werden. An der Maschinenspindel einer solchen Werkzeugmaschine kann der Werkzeugkopf 10 mit hoher Drehzahl um eine Drehachse 28 rotiert werden. Der Werkzeugkopf 10 enthält eine Zugstange 30. Die Zugstange 30 fluchtet mit der Drehachse 28 des Werkzeugkopfs 10. Die Zugstange 30 kann in Richtung der Drehachse 28 verlagert werden. Durch Verlagern der Zugstange 30 ist es möglich, den Schieber 14 entsprechend dem in der Fig. 1 gezeigten Doppelpfeil 32 zu bewegen.

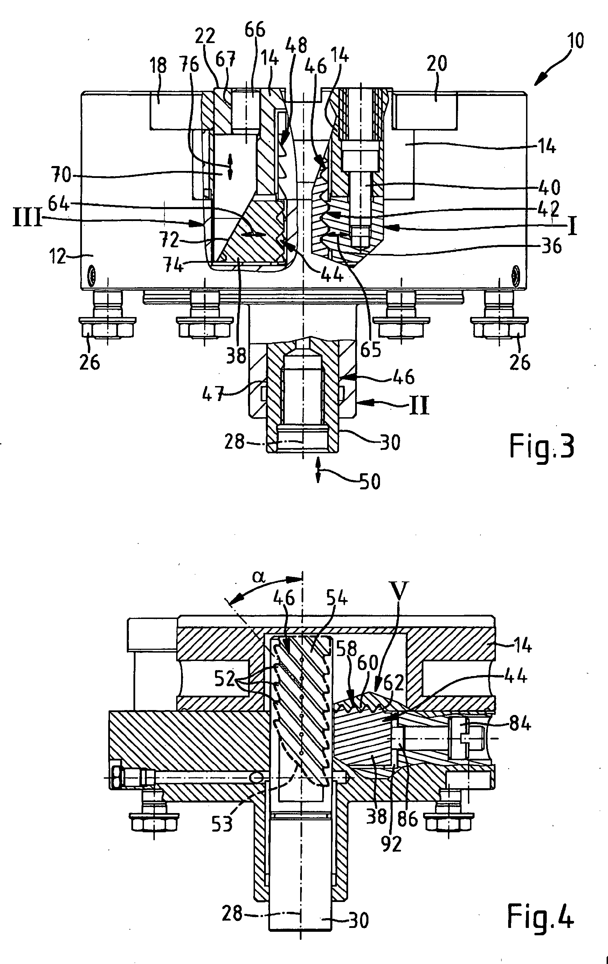

Die Fig. 3 ist eine Seitenansicht des Werkzeugkopfs 10, die mehrere Teilschnitte entlang den Linien I - I, II - II und III - III aus Fig. 1 enthält. In dem Werkzeugkopf 10 gibt es eine erste Zahnplatte 36 und eine zweite Zahnplatte 38. Die Zahnplatten 36, 38 sind an einem rückwärtigen Abschnitt des Schiebers 14 in einer Linearführung angeordnet. An dem Schieber 12 können die Zahnplatten 36, 38 mit Befestigungsschrauben 40 festgelegt werden. Die Zahnplatte 36 hat eine Schrägverzahnung 42. In der Zahnplatte 38 ist eine Schrägverzahnung 44 ausgebildet. Die Zugstange 30 ist in einer Linearführung 47 an dem Grundkörper 12 des Werkzeugkopfs 10 aufgenommen. Die Zugstange 30 hat einen ersten Abschnitt mit einer Schrägverzahnung 46. Sie umfasst einen zweiten Abschnitt, in dem eine Schrägverzahnung 48 ausgebildet ist.

Die Schrägverzahnung 46 der Zugstange 30 ist komplementär zu der Schrägverzahnung 42 der Zahnplatte 36. Die Schrägverzahnung 42 der Zahnplatte 36 wirkt als Getriebemittel und ist mit der Schrägverzahnung 46 der Zugstange 30 in Eingriff. Die Schrägverzahnung 48 der Zugstange 30 ist entsprechend komplementär zu der Schrägverzahnung 44 der Zahnplatte 38. Auch die Schrägverzahnung 44 der Zahnplatte 38 wirkt als Getriebemittel und ist mit der Schrägverzahnung 48 der Zugstange 30 in Eingriff.

Die Zahnplatten 36, 38 und die Abschnitte der Zugstange 30 mit den Schrägverzahnungen 46, 48 bilden ein Getriebe. Mit diesem Getriebe wird eine dem Doppelpfeil 50 entsprechende Bewegung der Zugstange 30 in der Richtung der Drehachse 28 in eine hierzu senkrechte, radiale Bewegung des Schiebers 14 umgesetzt. Die Richtung dieser radialen Bewegung des Schiebers 14 entspricht der Richtung des Doppelpfeils 32 in Fig. 1.

Die Fig. 4 ist ein Schnitt des Werkzeugskopfs entlang der Linie IV-IV aus Fig. 1, die einen Teilschnitt der Linie V - V aus Fig. 1 enthält. Die Fig. 4 zeigt den Abschnitt der Zugstange 30 mit der Schrägverzahnung 46 und die Zahnplatte 38 mit der Schrägverzahnung 44. Die Schrägverzahnung 46 der Zugstange 30 hat Verzahnungsrippen 52. Die Verzahnungsrippen 52 der Schrägverzahnung 46 liegen in einer gemeinsamen Ebene 53. Diese Ebene 53 ist zu der Drehachse 28 des Werkzeugkopfs 10 seitlich versetzt positioniert. Die Ebene 53 ist parallel zu der Drehachse 28 des Werkzeugskopfs 10. Die Verzahnungsrippen 52 der Schrägverzahnung 46 schließen mit der senkrechten Projektion der Drehachse 28 in diese Ebene den Winkel α = 40° ein. Die Verzahnungsrippen 52 haben Flanken 54. Die Flanken 54 der Verzahnungsrippen 52 sind zu der Ebene der Schrägverzahnung geneigt. Der Neigungswinkel β für die Flanken 54 der Verzahnungsrippen 56 zu der Ebene 53 beträgt β = 60°. Entsprechendes gilt für die Verzahnungsrippen 56 der Schrägverzahnung 44 der Zahnplatte 38 und für die Verzahnungsrippen der Schrägverzahnung 48 der Zugstange 30 und der Schrägverzahnung 42 der Zahnplatte 36.

Die Zahnplatten 36, 38 sind in Ausnehmungen an dem Grundkörper 12 des Werkzeugkopfs 10 aufgenommen. Die Fig. 4 zeigt die Ausnehmung 92 für die Zahnplatte 38. Der Grundkörper 12 enthält eine Schraube 84. Die Schraube 84 hat ein in die Ausnehmung 92 ragendes Anschlagstück 86. Das Anschlagstück 86 ist ein Anschlag für die Zahnplatte 38. Mittels der Schraube 84 kann der Bewegungsweg für den Schieber 14 in dem Werkzeugkopf 10, d.h. dessen Hub, eingestellt werden. Der Zahnplatte 36 an dem Schieber 14 ist eine der Schraube 84 entsprechende Schraube 88 zugeordnet, die in dem Grundkörper 12 dieses Werkzeugkopfs 10 festgelegt ist.

Die Linearführung der Zahnplatten 36, 38 an dem Schieber 14 ist als Parallelverzahnung ausgebildet. Die Fig. 4 zeigt die Parallelverzahnung 58 für die Zahnplatte 38 an dem Schieber 14. Die Parallelverzahnung 58 umfasst eine Verzahnung mit Verzahnungsrippen 60, die in dem Schieber 14 verlaufen. Komplementär hierzu gibt es an der Zahnplatte 38 Verzahnungsrippen 62. Die Verzahnungsrippen 60 der Parallelverzahnung 58 sind senkrecht zu der Ebene der Verzahnungsrippen der Schrägverzahnung 44 der Zahnplatte 38 angeordnet. Die an der Zahnplatte 38 ausgebildete Verzahnung mit den Verzahnungsrippen 62 ist in Kämmeingriff mit der die Verzahnungsrippen 60 aufweisenden Parallelverzahnung 58 an dem Schieber 14. Entsprechendes gilt für die als Parallelverzahnung ausgebildete Linearführung der Zahnplatte 36 an dem Schieber 14. Durch Bewegen der Zahnplatten 36, 38 in den Parallelverzahnungen kann die Schrägverzahnung 42, 44 einer jeden Zahnplatte 36, 38 entsprechend den Doppelpfeilen 64, 65 in Fig. 3 relativ zu der Schrägverzahnung 46, 48 der Zugstange 30 verlagert werden. Dies ermöglicht es, die Schrägverzahnung der Zahnplatten 36, 38 in die hierzu komplementäre Schrägverzahnung 42, 44 der Zugstange 30 zu bewegen.

Für das Bewegen der Zahnplatten 36, 38 gibt es in dem Schieber 14 eine Verstelleinrichtung. Die Fig. 3 zeigt die Verstelleinrichtung 66 für die Zahnplatte 36. Die Verstelleinrichtung 66 ist eine Verstellschraube, die in einem Gewinde 67 in dem Schieber 14 des Werkzeugskopfs 10 geführt ist. Die Verstellschraube 66 kann mittels eines Einstellwerkzeugs von der Schieberfläche 22 her betätigt werden. Die Verstellschraube 66 wirkt auf ein Keilgetriebe mit einem Verstellkeil 70. Der Verstellkeil 70 hat eine Keilfläche 72. Die Keilfläche 72 liegt an einer hierzu komplementären Keilfläche 74 an der Zahnplatte 38. Durch Bewegen der Verstellschraube 66 in dem Schieber 14 kann der Verstellkeil 70 entsprechend dem Pfeil 76 verlagert werden. Hierdurch wird die Zahnplatte 38 in der Richtung des Doppelpfeils 64 gegen die Schrägverzahnung 46 an der Zugstange 30 gedrückt.

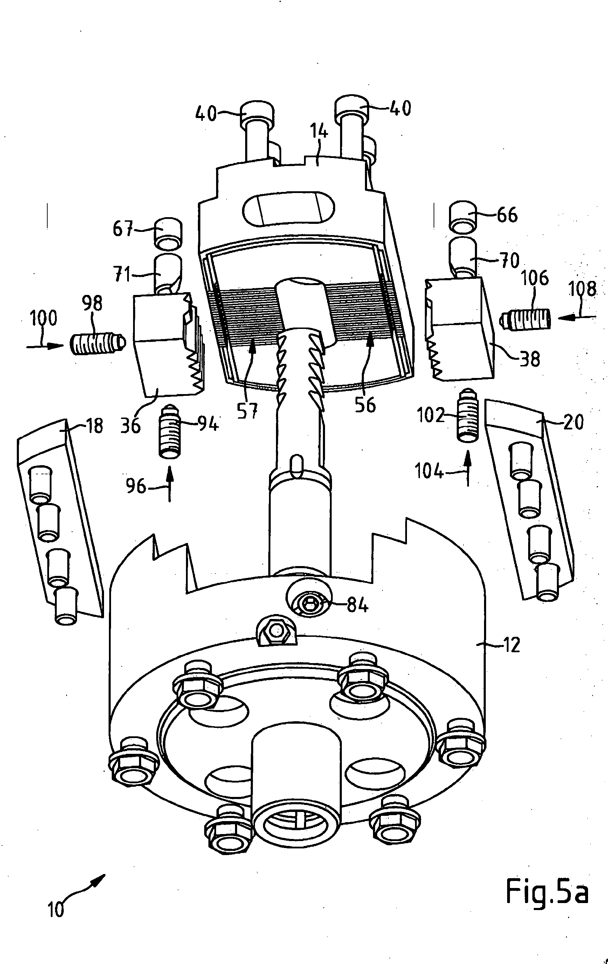

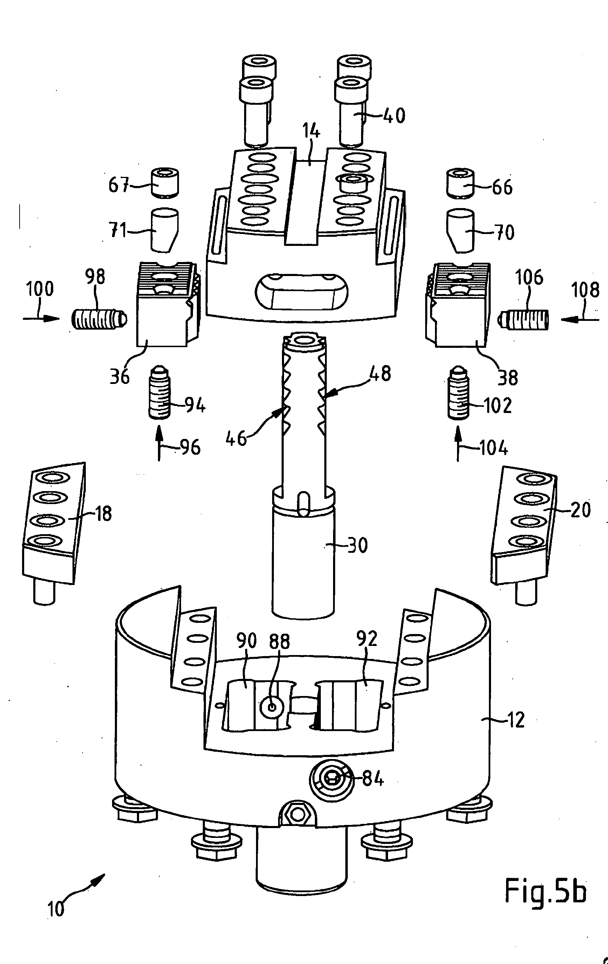

Die Fig. 5a und Fig. 5b zeigen eine Explosionsdarstellung des Werkzeugskopfs mit unterschiedlichen Blickrichtungen.

Die Zahnplatten 36, 38 befinden sich in dem Werkzeugkopf 10 in Ausnehmungen 90, 92, die an dem Grundkörper 12 des Werkzeugkopfs 10 ausgebildet sind. In den Ausnehmungen 90, 92 sind die Zahnplatten 36, 38 jeweils in zwei Raumrichtungen mit Federkraft beaufschlagt.

Die Zahnplatte 36 ist mittels einer in dem Grundkörper 12 des Werkzeugkopfs 10 festgelegten Kugeldruckschraube 94 in der Richtung 96 in die Parallelverzahnung 57 an dem Schieber 14 gedrückt. Darüber hinaus ist die Zahnplatte 36 durch eine in den Grundkörper 12 eingeschraubte Kugeldruckschraube 98 in einer Richtung 100 mit Federkraft beaufschlagt, die der Bewegungsrichtung der Zahnplatte 36 in der als Parallelverzahnung 57 ausgebildeten Linearführung an dem Schieber 14 entspricht. Entsprechend wirkt auf die Zahnplatte 38 eine in dem Grundkörper 12 des Werkzeugköpfs 10 festgelegte Kugeldruckschraube 102, mittels derer die Zahnplatte 38 in der Richtung des Pfeils 104 in die Parallelverzahnung 56 an dem Schieber 14 gepresst wird. Wie die Zahnplatte 36 ist auch die Zahnplatte 38 außerdem durch eine in einen Wandungsabschnitt der Ausnehmung 92 in dem Grundkörper 12 eingeschraubte Kugeldruckschraube 106 in einer Richtung 108 mit Federkraft beaufschlagt, die der Bewegungsrichtung der Zahnplatte 38 in der als Parallelverzahnung 56 ausgebildeten Linearführung an dem Schieber 14 entspricht.

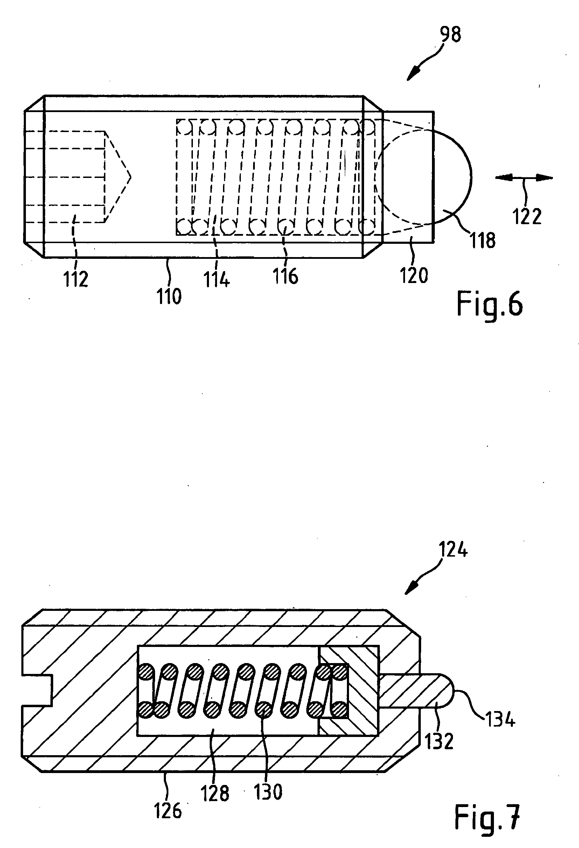

Die Fig. 6 zeigt die Kugeldruckschraube 98 in dem Werkzeugkopf 10. Die Kugeldruckschraube 98 hat einen Gewindekörper 110. An dem Gewindekörper 110 ist ein Eingriff 112 für einen Verstellschlüssel ausgebildet. Der Gewindekörper 110 hat einen Hohlraum 114, in dem eine Druckfeder 116 positioniert ist. Die Druckfeder 116 wirkt auf eine Kugel 118 aus gehärtetem Metall. Die Kugel 118 ist in einem Kragenabschnitt 120 an dem Gewindekörper gehalten. Die Kugel 118 kann relativ zu dem Gewindekörper 110 entsprechende dem Doppelpfeil 112 verlagert werden. Mittels der Kugel 118 wird die Zahnplatte 36 in dem Werkzeugkopf 10 in der Fig. 5a gegen den Schieber 14 gedrückt. Dabei kann sich die Kugel 118 an der Zahnplatte 36 abrollen, wenn der Schieber 14 in dem Werkzeugkopf 10 verlagert wird. Die Kugeldruckschrauben 94, 98, 102 und 106 sind jeweils in einem Wandungsabschnitt der Ausnehmungen 90 bzw. 92 in dem Grundkörper 12 des Werkzeugkopfs 10 festgelegt.

Die Kugeldruckschrauben 94, 102 und 106 in dem Werkzeugkopf 10 in der Fig. 5a sind wie die Kugeldruckschraube 98 aufgebaut.

Es sei bemerkt, dass solche Kugeldruckschrauben grundsätzlich auch in die Zahnplatten 36, 38 eingeschraubt werden können. Die Kugelkörper der Schrauben wirken dann auf entsprechende Wandungsabschnitte in den in dem Grundkörper 12 des Werkzeugkopfs ausgebildeten Ausnehmungen für die Zahnplatte 36, 38.

Mit den Kugeldruckschrauben 94, 98, 102, 106 wird gewährleistet, dass die Zahnplatten 36, 38 selbsttätig in die als Parallelverzahnungen 56, 57 ausgebildeten Linearführungen an dem Schieber 14 und in die Schrägverzahnung 46, 48 der Zugstange 30 gedrückt werden, wenn die Befestigungsschrauben 40 für das Festlegen der Zahnplatten 36, 38 an dem Schieber 14 gelöst sind. Dies ermöglicht den Ausgleich eines unerwünschten Spiels der Verzahnung der Zahnplatten 36, 38 an dem Schieber 14 und der Verzahnung der Zugstange 30, ohne dass die Position der Zahnplatten 36, 38 vermessen werden muss.

Das mit den Zahnplatten 36, 38 und den Schrägverzahnungen 44, 46 der Zugstange 30 gebildete Getriebe in dem Werkzeugkopf 10 kann damit durch Betätigen der Befestigungsschrauben 40 und der Verstellschrauben 66, 67 sogar spielfrei gestellt werden, wenn der Werkzeugkopf 10 an die Maschinenspindel einer Werkzeugmaschine angeschlossen ist.

Das Spielfreistellen einer Zahnplatte 36, 38 in dem vorstehend beschriebenen Werkzeugkopf 10 kann dabei wie folgt durchgeführt werden:
1. Schritt: Öffnen und leichtes Anlegen der Befestigungsschrauben 40 für eine Zahnplatte 36, 38. Eine Zahnplatte 36, 38 liegt in der als Parallelverzahnung 56, 57 ausgebildeten Linearführung an dem Schieber 14 an. Die Zahnplatten 36, 38 können so in der Linearführung der Parallelverzahnung 56, 57 ohne Verkippen verschoben werden.
2. Schritt: Verstellen der Verstellschraube 66, 67 um durch Bewegen des Keilgetriebes mit den Verstellkeil 70 bzw. 71 eine gewünschte Position für eine Zahnplatte 36, 38 einzustellen.
3. Schritt: Anziehen der Befestigungsschrauben 40 mit einem Nenndrehmoment. Dadurch wird eine Zahnplatte 36, 38 mit Kraftschluss in der gewünschten Position am Schieber 14 fixiert.
4. Schritt: Beaufschlagen der Verstellsctiraube 66 bzw. 67 mit einem vorgegebenen Drehmoment: Dies bewirkt einen Formschluss einer entsprechenden Zahnplatte 36, 38 mit dem Schieber 14. Auf diese Weise wird die Unverrückbarkeit der Zahnplatte 36, 38 sichergestellt.

Die Fig. 7 zeigt ein federndes Druckstück 124. Damit kann eine Zahnplatte in dem vorstehend beschriebenen Werkzeugkopf ähnlich wie mit einer Kugeldruckschraube gegen den Schieber im Werkzeugkopf gedrückt werden. Das federnde Druckstück 124 hat einen Gewindekörper 126 mit einem Hohlraum 128. In dem Hohlraum 128 ist eine Druckfeder 130 angeordnet, die auf ein Kontaktstück 132 wirkt. Das Kontaktstück 132 hat eine Wirkfläche 134. Die Wirkfläche 134 liegt an einer Seitenfläche einer Zahnplatte in dem Schieber an, um die Zahnplatte gegen den Schieber bzw. gegen die Verzahnung der Zugstange im Werkzeugkopf zu drücken. Wie vorstehend zu den im Werkzeugkopf angeordneten Kugeldruckschrauben beschrieben, kann ein solches federndes Druckstück allerdings auch in einer Zahnplatte im Werkzeugkopf festgelegt werden. In diesem Fall ist das Kontaktstück des federnden Druckstücks wie der Kugelkörper der Kugeldruckschraube gegen einen Wandungsabschnitt der Aufnahme für eine Zahnplatte in dem Gehäusekörper des Werkzeugskopfs abgestützt.

Zusammenfassend ist folgendes festzuhalten: Die Erfindung betrifft einen Werkzeugkopf 10 für den Einsatz in Werkzeugmaschinen mit einem um eine Drehachse 28 rotierbaren Grundkörper 12. Der Werkzeugkopf 10 hat einen Schieber 14. Der Schieber 14 ist mit einer über eine axial im Grundkörper 12 ausgerichtete Zugstange 30 verschiebbar. Der Schieber 14 ist mit mindestens einem Werkzeug oder einem Werkzeugträger bestückbar. An dem Schieber 14 ist wenigstens eine verstellbare Zahnplatte 36, 38 festgelegt. Die Zahnplatte 36, 38 weist eine als Getriebemittel wirkende Schrägverzahnung 42, 44 für den Eingriff einer hierzu komplementären Schrägverzahnung 44, 48 der Zugstange 30 auf. Der Schieber 14 hat eine Verstelleinrichtung 66 für das Bewegen der wenigstens einen Zahnplatte 36, 38 mit ihrer Schrägverzahnung 42, 44 in die hierzu komplementäre Schrägverzahnung 44, 48 der Zugstange 30.

## Patentansprüche

1. Werkzeugkopf (10) für den Einsatz in Werkzeugmaschinen mit einem um eine Drehachse (28) rotierbaren Grundkörper (12), mit einem über eine axial im Grundkörper (12) ausgerichtete Zugstange (30) verschiebbaren Schieber (14), der mit mindestens einem Werkzeug oder einem Werkzeugträger bestückbar ist, und mit wenigstens einer an dem Schieber (14) festlegbaren verstellbaren Zahnplatte (36, 38), die eine als Getriebemittel wirkende Schrägverzahnung (42, 44) für den Eingriff einer hierzu komplementären Schrägverzahnung (44, 48) der Zugstange (30) aufweist, wobei der Schieber (14) eine Verstelleinrichtung (66) für das Bewegen der wenigstens einen Zahnplatte (36, 38) mit ihrer Schrägverzahnung (42, 44) in die hierzu komplementäre Schrägverzahnung (44, 48) der Zugstange (30) enthält,
**dadurch gekennzeichnet, dass**
die Verstelleinrichtung eine in dem Schieber aufgenommene Verstellschraube (66) aufweist, mittels der ein bewegbar angeordneter Verstellkeil (70) verlagert werden kann, der auf eine an der wenigstens einen Zahnplatte (36) ausgebildete Keilfläche (72) wirkt.

2. Werkzeugkopf nach Anspruch 1, **dadurch gekennzeichnet, dass** ein die wenigstens eine Zahnplatte (36, 38) mit Kraft beaufschlagendes Federmittel (94, 102) vorgesehen ist, um die Zahnplatte (36, 38) gegen den Schieber (14) zu drücken.

3. Werkzeugkopf nach Anspruch 2, **dadurch gekennzeichnet, dass** die wenigstens eine Zahnplatte (36, 38) in einer an dem Grundkörper (12) ausgebildeten Ausnehmung (90, 92) angeordnet ist, die einen das Federmittel (98, 106) abstützenden Wandungsabschnitt hat.

4. Werkzeugkopf (10) für den Einsatz in Werkzeugmaschinen mit einem um eine Drehachse (28) rotierbaren Grundkörper (12), mit einem über eine axial im Grundkörper (12) ausgerichtete Zugstange (30) verschiebbaren Schieber (14), der mit mindestens einem Werkzeug oder einem Werkzeugträger bestückbar ist, und mit wenigstens einer an dem Schieber (14) festlegbaren verstellbaren Zahnplatte (36, 38), die eine als Getriebemittel wirkende Schrägverzahnung (42, 44) für den Eingriff einer hierzu komplementären Schrägverzahnung (44, 48) der Zugstange (30) aufweist, wobei der Schieber (14) eine Verstelleinrichtung (66) für das Bewegen der wenigstens einen Zahnplatte (36, 38) mit ihrer Schrägverzahnung (42, 44) in die hierzu komplementäre Schrägverzahnung (44, 48) der Zugstange (30) enthält,
**dadurch gekennzeichnet, dass**
ein die wenigstens eine Zahnplatte (36, 38) mit Kraft beaufschlagendes Federmittel (98, 106) vorgesehen ist, um die Schrägverzahnung (42, 44) der wenigstens einen Zahnplatte (36, 38) in die hierzu komplementäre Schrägverzahnung (44, 48) der Zugstange (30) zu drücken.

5. Werkzeugkopf nach Anspruch 4, **dadurch gekennzeichnet, dass** die Verstelleinrichtung eine in dem Schieber aufgenommene Verstellschraube (66) aufweist, mittels der ein bewegbar angeordneter Verstellkeil (70) verlagert werden kann, der auf eine an der wenigstens einen Zahnplatte (36) ausgebildete Keilfläche (72) wirkt.

6. Werkzeugkopf nach Anspruch 4 oder 5, **dadurch gekennzeichnet, dass** die wenigstens eine Zahnplatte (36, 38) in einer an dem Grundkörper (12) ausgebildeten Ausnehmung (90, 92) angeordnet ist, die einen das Federmittel (94, 102) abstützenden Wandungsabschnitt hat.

7. Werkzeugkopf nach einem der Ansprüche 2 bis 6, **dadurch gekennzeichnet, dass** das Federmittel ein an dem Grundkörper (12) oder der Zahnplatte (36, 38) aufgenommenes federndes Druckstück (22) mit einer sich an dem Grundkörper (12) oder der Zahnplatte (36, 38) abstützenden Wirkfläche (134) und/oder eine an dem Grundkörper (12) oder der Zahnplatte (36, 38) befestigte Kugeldruckschraube (98) mit einer sich an dem Grundkörper (12) oder der Zahnplatte (36, 38) abstützenden bewegbaren Kugelkörper (118) ist.

8. Werkzeugkopf nach einem der Ansprüche 1 bis 7, **dadurch gekennzeichnet, dass** die wenigstens eine Zahnplatte (36) mit wenigstens einem vorzugsweise als Befestigungsschraube (40) ausgebildeten Befestigungsmittel an dem Schieber (14) lösbar festgelegt werden kann.

9. Werkzeugkopf nach einem der Ansprüche 1 bis 8, **dadurch gekennzeichnet, dass** an dem Schieber (14) wenigstens eine erste verstellbare Zahnplatte (36) festgelegt ist, die eine als Getriebemittel wirkende Schrägverzahnung (42) für den Eingriff einer hierzu komplementären Schrägverzahnung (44) der Zugstange (30) aufweist, und an dem Schieber (14) eine zweite verstellbare Zahnplatte (36) festgelegt ist, die eine als Getriebemittel wirkende Schrägverzahnung (46) für den Eingriff einer hierzu komplementären Schrägverzahnung (48) der Zugstange (30) hat.

10. Werkzeugkopf nach Anspruch 9, **dadurch gekennzeichnet, dass** die erste Zahnplatte (36) und die zweite Zahnplatte (38) voneinander unabhängig verstellbar sind.

11. Werkzeugkopf nach einem der Ansprüche 1 bis 10, **dadurch gekennzeichnet, dass** die wenigstens eine Zahnplatte (36, 38) in einer an dem Schieber (14) ausgebildeten Linearführung (56, 57) geführt ist.

12. Werkzeugkopf nach Anspruch 11, **dadurch gekennzeichnet, dass** die Linearführung (56, 57) senkrecht zu der Verstellrichtung (32) des Schiebers (14) ausgerichtet ist.

13. Werkzeugkopf nach Anspruch 11 oder 12, **dadurch gekennzeichnet, dass** die Linearführung eine Parallelverzahnung (56, 57) ist.

14. Werkzeugkopf nach einem der Ansprüche 11 bis 13, **dadurch gekennzeichnet, dass** die Verstelleinrichtung mit einem Keilgetriebe (70), einem Exzentergetriebe oder einem Schraubengetriebe gekoppelt ist.

15. Verfahren zum Ausgleichen eines unerwünschten Spiels von Verzahnung und Zugstange in einem gemäß einem der vorgenannten Ansprüche ausgebildeten Werkzeugkopf (10), bei dem in einem ersten Schritt die wenigstens eine Zahnplatte (36, 38) von dem Schieber (14) gelöst wird, bei dem in einem zweiten Schritt die Zahnplatte (36, 38) an den Schieber (14) formschlüssig angelegt wird, bei dem in einem dritten Schritt die Zahnplatte (36, 38) an dem Schieber (14) über eine Verstelleinrichtung (66, 67) mit Verstellkraft beaufschlagt wird, um die Schrägverzahnungen (42, 44) in die hierzu komplementäre Schrägverzahnung (44, 48) der Zugstange (30) zu drücken, bei dem in einem vierten Schritt die Zahnplatte (36, 38) an dem Schieber (14) so festgelegt wird, dass die Zahnplatte (36, 38) an den Schieber (14) kraftschlüssig fixiert ist, und bei dem in einem fünften Schritt die Zahnplatte (36, 38) an den Schieber (14) über die Verstelleinrichtung (66, 63) mit Verstellkraft beaufschlagt wird, um die Zahnplatte (36, 38) an den Schieber (14) formschlüssig festzulegen.

## Claims

1. A tool head (10) for use in machine tools having a base body (12) which can be rotated about a rotational axis (28), having a slide (14) which can be displaced via a pull rod (30), oriented axially in the base body (12), and can be fitted with at least one tool or a tool holder, and having at least one adjustable toothed plate (36, 38) which can be fixed on the slide (14), which adjustable toothed plate (36, 38) has a helical toothing system (42, 44) which acts as gear means for the engagement of a helical toothing system (44, 48), complementary with respect to it, of the pull rod (30), wherein the slide (14) comprises an adjusting device (66) for moving the at least one toothed plate (36, 38) with its helical toothing system (42, 44) into the helical toothing system (44, 48), complementary with respect to it, of the pull rod (30),
**characterized in that**
the adjusting device has an adjusting screw (66) which is received in the slide and by means of which a movably arranged adjusting wedge (70) can be displaced, which adjusting wedge (70) acts on a wedge face (72) which is formed on the at least one toothed plate (36).

2. The tool head as claimed in claim 1, **characterized in that** a spring means (94, 102) which loads the at least one toothed plate (36, 38) with force is provided, in order to press the toothed plate (36, 38) against the slide (14).

3. The tool head as claimed in claim 2, **characterized in that** the at least one toothed plate (36, 38) is arranged in a recess (90, 92) which is formed on the base body (12) and has a wall section which supports the spring means (98, 106).

4. A tool head (10) for use in machine tools having a base body (12) which can be rotated about a rotational axis (28), having a slide (14) which can be displaced via a pull rod (30), oriented axially in the base body (12), and can be fitted with at least one tool or a tool holder and having at least one adjustable toothed plate (36, 38) which can be fixed on the slide (14), which adjustable toothed plate (36, 38) has a helical toothing system (42, 44) which acts as gear means for the engagement of a helical toothing system (44, 48), complementary with respect to it, of the pull rod (30), wherein the slide (14) comprises an adjusting device (66) for moving the at least one toothed plate (36, 38) with its helical toothing system (42, 44) into the helical toothing system (44, 48), complementary with respect to it, of the pull rod (30),
**characterized in that**
a spring means (98, 106) which loads the at least one toothed plate (36, 38) with force is provided, in order to press the helical toothing system (42, 44) of the at least one toothed plate (36, 38) into the helical toothing system (44, 48), complementary with respect to it, of the pull rod (30).

5. The tool head as claimed in claim 4, **characterized in that** the adjusting device has an adjusting screw (66) which is received in the slide and by means of which a movably arranged adjusting wedge (70) can be displaced, which adjusting wedge (70) acts on a wedge face (72) which is formed on the at least one toothed plate (36).

6. The tool head as claimed in claim 4 or 5, **characterized in that** the at least one toothed plate (36, 38) is arranged in a recess (90, 92) which is formed on the base body (12) and has a wall section which supports the spring means (94, 102).

7. The tool head as claimed in one of claims 2 to 6, **characterized in that** the spring means is a resilient pressure piece (22) which is received on the base body (12) or the toothed plate (36, 38) with an active face (134) which is supported on the base body (12) or the toothed plate (36, 38), and/or a ball thrust screw (98) which is fastened to the base body (12) or the toothed plate (36, 38) with a movable ball body (118) which is supported on the base body (12) or the toothed plate (36, 38).

8. The tool head as claimed in one of claims 1 to 7, **characterized in that** the at least one toothed plate (36) can be fixed releasably on the slide (14) by way of at least one fastening means which is preferably configured as a fastening screw (40).

9. The tool head as claimed in one of claims 1 to 8, **characterized in that** at least one first adjustable toothed plate (36) is fixed on the slide (14), which toothed plate (36) has a helical toothing system (42) which acts as gear means for the engagement of a helical toothing system (44), complementary with respect to it, of the pull rod (30), and a second adjustable toothed plate (36) is fixed on the slide (14), which second adjustable toothed plate (36) has a helical toothing system (46) which acts as gear means for the engagement of a helical toothing system (48), complementary with respect to it, of the pull rod (30).

10. The tool head as claimed in claim 9, **characterized in that** the first toothed plate (36) and the second toothed plate (38) can be adjusted independently of one another.

11. The tool head as claimed in one of claims 1 to 10, **characterized in that** the at least one toothed plate (36, 38) is guided in a linear guide (56, 57) which is formed on the slide (14).

12. The tool head as claimed in claim 11, **characterized in that** the linear guide (56, 57) is oriented perpendicularly with respect to the adjusting direction (32) of the slide (14).

13. The tool head as claimed in claim 11 or 12, **characterized in that** the linear guide is a parallel toothing system (56, 57).

14. The tool head as claimed in one of claims 11 to 13, **characterized in that** the adjusting device is coupled to a wedge mechanism (70), an eccentric gear mechanism or a screw mechanism.

15. A method for compensating for an undesirable play of toothing system and pull rod in a tool head (10) which is configured as claimed in one of the abovementioned claims, in which method, in a first step, the at least one toothed plate (36, 38) is detached from the slide (14), in which method, in a second step, the toothed plate (36, 38) is placed onto the slide (14) in a positively locking manner, in which method, in a third step, the toothed plate (36, 38) on the slide (14) is loaded with adjusting force via an adjusting device (66, 67), in order to press the helical toothing systems (42, 44) into the helical toothing system (44, 48), complementary with respect to them, of the pull rod (30), in which method, in a fourth step, the toothed plate (36, 38) is fixed on the slide (14) in such a way that the toothed plate (36, 38) is fixed to the slide (14) in a non-positive manner, and in which method, in a fifth step, the toothed plate (36, 38) is loaded against the slide (14) with adjusting force via the adjusting device (66, 63), in order to fix the toothed plate (36, 38) to the slide (14) in a positively locking manner.

## Revendications

1. Tête porte-outil (10) à utiliser dans des machines-outils, avec un corps de base (12) rotatif autour d'un axe de rotation (28) et avec un coulisseau (14) pouvant coulisser au moyen d'une bielle (30) orientée axialement dans le corps de base (12) et pouvant être équipé d'au moins un outil ou porte-outil, sachant qu'au moins une plaque dentée réglable (36, 38) est fixée sur le coulisseau (14), plaque qui présente une denture hélicoïdale (42, 44) agissant comme moyen de transmission et destinée à engrener avec une denture hélicoïdale complémentaire (46, 48) de la bielle (30), et sachant que le coulisseau (14) comprend un dispositif de réglage (66) pour le déplacement de la plaque dentée au moins unique (36, 38) par sa denture hélicoïdale (42, 44) dans la denture hélicoïdale complémentaire (46, 48) de la bielle (30),
**caractérisée en ce que** le dispositif de réglage présente une vis de réglage (66) reçue dans le coulisseau et au moyen de laquelle peut être déplacée une clavette de réglage (70) montée mobile, qui agit sur une surface biaise (72) configurée sur la plaque dentée au moins unique (36).

2. Tête porte-outil selon la revendication 1, **caractérisée en ce qu'**il est prévu un moyen formant ressort (94, 102) sollicitant en force la plaque dentée au moins unique (36, 38) afin de presser la plaque dentée (36, 38) contre le coulisseau (14).

3. Tête porte-outil selon la revendication 2, **caractérisée en ce que** la plaque dentée au moins unique (36, 38) est disposée dans un évidement (90, 92) configuré sur le corps de base (12), évidement qui possède une portion de paroi soutenant le moyen formant ressort (98, 106).

4. Tête porte-outil (10) à utiliser dans des machines-outils, avec un corps de base (12) rotatif autour d'un axe de rotation (28) et avec un coulisseau (14) pouvant coulisser au moyen d'une bielle (30) orientée axialement dans le corps de base (12) et pouvant être équipé d'au moins un outil ou porte-outil, sachant qu'au moins une plaque dentée réglable (36, 38) est fixée sur le coulisseau (14), plaque qui présente une denture hélicoïdale (42, 44) agissant comme moyen de transmission et destinée à engrener avec une denture hélicoïdale complémentaire (46, 48) de la bielle (30), et sachant que le coulisseau (14) comprend un dispositif de réglage (66) pour le déplacement de la plaque dentée au moins unique (36, 38) par sa denture hélicoïdale (42, 44) dans la denture hélicoïdale complémentaire (46, 48) de la bielle (30),
**caractérisée en ce qu'**il est prévu un moyen formant ressort (98, 106) sollicitant en force la plaque dentée au moins unique (36, 38) afin de presser la denture hélicoïdale (42, 44) de la plaque dentée au moins unique (36, 38) dans la denture hélicoïdale complémentaire (46, 48) de la bielle (30).

5. Tête porte-outil selon la revendication 4, **caractérisée en ce que** le dispositif de réglage présente une vis de réglage (66) reçue dans le coulisseau et au moyen de laquelle peut être déplacée une clavette de réglage (70) montée mobile, qui agit sur une surface biaise (72) configurée sur la plaque dentée au moins unique (36).

6. Tête porte-outil selon la revendication 4 ou 5, **caractérisée en ce que** la plaque dentée au moins unique (36, 38) est disposée dans un évidement (90, 92) configuré sur le corps de base (12), évidement qui possède une portion de paroi soutenant le moyen formant ressort (94, 102).

7. Tête porte-outil selon l'une des revendications 2 à 6, **caractérisée en ce que** le moyen formant ressort est un élément de pression élastique (22) reçu sur le corps de base (12) ou la plaque dentée (36, 38) et doté d'une surface active s'appuyant contre le corps de base (12) ou la plaque dentée (36, 38), et/ou une vis de pression à bille (98) fixée sur le corps de base (12) ou la plaque dentée (36, 38) et dotée d'un corps de bille mobile (118) s'appuyant contre le corps de base (12) ou la plaque dentée (36, 38).

8. Tête porte-outil selon l'une des revendications 1 à 7, **caractérisée en ce que** la plaque dentée au moins unique (36) peut être fixée de manière amovible sur le coulisseau (14) par au moins un moyen de fixation réalisée de préférence sous la forme d'une vis de fixation (40).

9. Tête porte-outil selon l'une des revendications 1 à 8, **caractérisée en ce qu'**au moins une première plaque dentée réglable (36) est fixée sur le coulisseau (14), plaque qui présente une denture hélicoïdale (42) agissant comme moyen de transmission et destinée à engrener avec une denture hélicoïdale complémentaire (46) de la bielle (30), et une deuxième plaque dentée réglable (38) est fixée sur le coulisseau (14), plaque qui présente une denture hélicoïdale (44) agissant comme moyen de transmission et destinée à engrener avec une denture hélicoïdale complémentaire (48) de la bielle (30).

10. Tête porte-outil selon la revendication 9, **caractérisée en ce que** la première plaque dentée (36) et la deuxième plaque dentée (38) sont réglables indépendamment l'une de l'autre.

11. Tête porte-outil selon l'une des revendications 1 à 10, **caractérisée en ce que** la plaque dentée au moins unique (36, 38) est guidée dans un guide linéaire (56, 57) configuré sur le coulisseau (14).

12. Tête porte-outil selon la revendication 11, **caractérisée en ce que** le guide linéaire (56, 57) est orienté perpendiculairement à la direction de réglage (32) du coulisseau (14).

13. Tête porte-outil selon la revendication 11 ou 12, **caractérisée en ce que** le guide linéaire est une denture parallèle (56, 57).

14. Tête porte-outil selon l'une des revendications 11 à 13, **caractérisée en ce que** le dispositif de réglage est couplé à une transmission à clavette (70), une transmission à excentrique ou une transmission à vis.

15. Procédé pour compenser un jeu indésirable de la denture et de la bielle dans une tête porte-outil (10) configurée selon l'une des revendications précédentes, selon lequel, dans une première étape, la plaque dentée au moins unique (36, 38) est détachée du coulisseau (14), selon lequel, dans une deuxième étape, la plaque dentée (36, 38) est placée en engagement positif sur le coulisseau (14), selon lequel, dans une troisième étape, la plaque dentée (36, 38) sur le coulisseau (14) est sollicitée par une force de réglage au moyen d'un dispositif de réglage (66, 67), afin de presser la denture hélicoïdale (42, 44) dans la denture hélicoïdale complémentaire (46, 48) de la bielle (30), selon lequel, dans une quatrième étape, la plaque dentée (36, 38) est fixée sur le coulisseau (14) de telle sorte que la plaque dentée (36, 38) est immobilisée à force sur le coulisseau (14), et selon lequel, dans une cinquième étape, la plaque dentée (36, 38) sur le coulisseau (14) est sollicitée par une force de réglage au moyen du dispositif de réglage (66, 67), afin de fixer la plaque dentée (36, 38) en engagement positif sur le coulisseau (14).
